# EUROPEAN PATENT SPECIFICATION

(11) **EP 1 487 082 B1**
(45) Date of publication and mention of the grant of the patent: **05.10.2005**
(21) Application number: 03011432.6
(22) Date of filing: 20.05.2003
(51) Int. Cl.: H02J 7/02, H02J 7/00

(54) **Inductive charging system for a portable electronic apparatus**
Induktives Ladesystem für eine tragbare elektronische Vorrichtung
Système de charge pour un appareil électronique portable

(43) Date of publication of application: 15.12.2004
(73) Proprietor: SIEMENS AKTIENGESELLSCHAFT, 80333 München (DE)
(72) Inventor: Hoeyer, Michael, 9200 Aalborg SV (DK)

(56) References cited:
- EP-A- 0 831 674
- EP-A- 0 940 903
- EP-A- 1 303 022
- US-B1- 6 316 909

## Description

Inductive charging is one way to charge portable electronic apparatuses without having physical electrical connection between the charger and the apparatus. Among other benefits, it gives the possibility to make highly waterproof apparatuses. This has become a more interesting topic, due to the ongoing miniaturization. Portable electronic apparatuses are becoming smaller and thus they are more likely to be taken to surroundings far from optimal usage conditions, including water droplets or excessive humidity levels threatening the electrical circuits of the apparatus. Especially crucial this is when the portable electronic apparatus is a necklace phone which the user is supposed to take with him- or herself to practically everywhere.

US patent 6,118,249 shows one possibility to implement a charger with inductive power transmission for batteries in a mobile electrical device.

EP 1 303 022 shows a charger that can be used to recharge by means of induction at least one battery belonging to a portable electronic object, such as, in particular, a wristwatch-type timepiece. A first induction coil forms the primary of the charging transformer, while a second induction coil placed in a charging circuit for the battery or batteries forms the transformer secondary. The charger is characterized in that it comprises a base having a housing intended to receive at least one part of the portable object which contains the secondary induction coil. The housing is disposed such that said portable device is spontaneously positioned in such a way that the primary and secondary induction coils are opposite one another. In this way, the battery or batteries, which power the portable object and enable it to work, may receive more charge.

EP 0 831 674 discloses a charging device comprising a cable that is further connected to a coil. The charging device is used to charge a rechargeable battery in a hearing aid that is located in the user's ear.

EP 1 315 051 shows a wrist watch of the bracelet type wherein an inductive coupler for charging the battery in the watch is included in the bracelet.

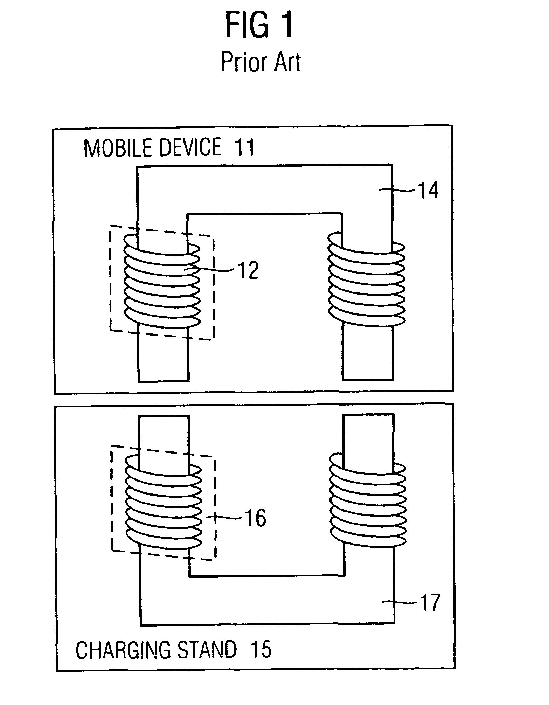

The problem with an inductive charging system, such as that of Figure 1, is that because of the inductive couplers 12 and the ferrite core 14, the charging part of the mobile device 11 takes up much space. Therefore the mobile device 11 itself will be quite large. If the mobile device 11 is very large, it is clearly a drawback because the comfort of use degrades. The charging stand 15 has, on the other hand, also to be relatively large. This is not only because of the size of the inductive couplers 16 and ferrite core 14, but also because the charging stand 15 has to fit tightly the mobile device 11. If the mobile device 11 is large, this inevitably leads to a large charging stand 15.

The main object of the present invention is to enable inductive charging for a portable electronic apparatus having a reasonably small size. This object can be achieved by using an elongated strap as described in claim 1.

Another object of the present invention is to provide a receiving means for the inductive coupler of the elongated strap. By using the receiving means of claim 10, the battery of the portable electronic apparatus can be charged.

Further objects of the inventions, portable electronic apparatus of claim 9, and charging system of claim 17 are complementary embodiments for the inventions above.

The dependent claims describe various preferred embodiments of the invention.

Using the strap for placing an inductive coupler provides many advantages. The apparatus itself can be designed smaller. Further, the resulting apparatus and strap can be more appealing, because the strap is esthetically very suitable for fixing the inductive coupler. Protective elements can also be placed close to the inductive coupler. The strap is suitable for carrying the apparatus. In order to charge the battery, it is not necessary to remove the strap, thus further reducing the complexity of the design of the apparatus.

The receiving means also provides advantages. The recess to accommodate the inductive coupler can be made smaller than in conventional receiving means, because now it is not the complete apparatus that has to fit into the recess. This in turn gives more degrees of freedom to design the receiving means. As an example, the receiving means can be used as a holder for the portable electronic device.

In the following, the invention is described in more detail referring to examples shown in Figures 2 to 10 of the appended drawings, wherein:
- Figure 1: shows an inductive charger of prior art;
- Figure 2: shows a portable electronic device including a strap equipped with an inductive coupler;
- Figure 3: shows the receiving means for the inductive coupler of the elongated strap;
- Figure 4: shows how the inductive coupler can be received in a charger, and how a portable electronic device including a rechargeable battery can then be charged;
- Figure 5: is a detailed sketch of the inductive charging part of Figure 4;
- Figure 6: illustrates how the inductive coupler can be constructed;
- Figure 7: illustrates the charger;
- Figure 8A: shows protective elements around the inductive coupler;
- Figure 8B: shows another possible structure for the inductive coupler;
- Figure 9: shows how charging for a rechargeable battery located in the strap can be performed; and
- Figure 10: shows a detailed look of charging circuitry on the portable electronic apparatus side.

Same reference numerals in different Figures refer to similar structural elements throughout the Figures. The reference numerals used are listed at the end of this description.

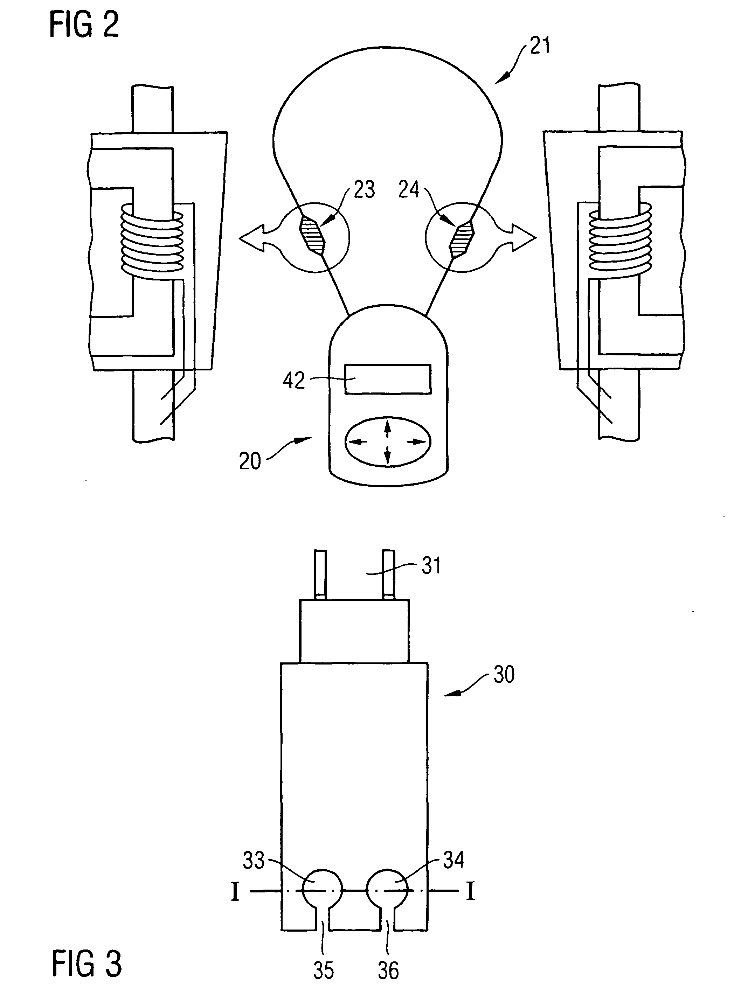

Figure 2 shows a portable electronic apparatus 20 together with an elongated strap 21 equipped with an inductive coupler 23. The elongated strap 21 is one suitable for carrying the portable electronic apparatus 20 around the neck or wrist of the user. A first inductive coupler 23 and a second (feedback) inductive coupler 24 are fixed to the elongated strap 21. The inductive coupler elements 23 and 24 include a coil, ferrite core, and necessary wiring.

The elongated strap 21 further includes wiring between the portable electronic apparatus 20 and the inductive couplers 23 and 24, respectively. The portable electronic apparatus 20 includes a rechargeable battery 42, for the loading of which the elongated strap 21 is used.

Figure 3 shows the charger 30 including means for receiving an inductive coupler 23 included in the elongated strap 21. The charger 30 comprises a mains plug 31 through which receiving means are connected to mains. Further, it comprises also holes 33 and 34 for the inductive coupler elements 23 and 24. Because the inductive coupler 23 and inductive (feedback) coupler 24 are parts of the elongated strap 21, and because it is not practical to remove them from their usual position for charging of the rechargeable battery, there are also openings 35 and 36 provided for each hole 33 and 34. In the example of Figure 3, the cross-section of the holes 35 and 36 is circular, but it is to be understood that any other form can be used as well. Further, instead of providing holes 33 and 34 as openings integral to the charger 30, any other corresponding form of receiving members for the inductive coupling elements 23 and 24 can be used instead of holes.

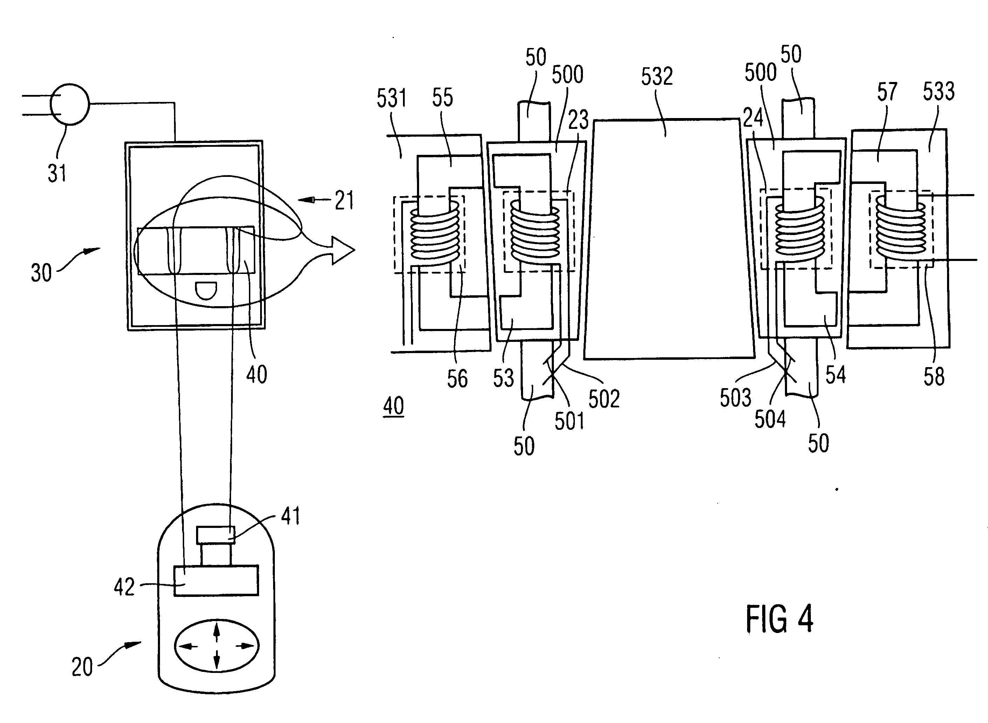

Figure 4 shows how the rechargeable battery 42 of the portable electronic apparatus 20 electrically connected to the inductive coupling elements 23 and 24 of the elongated strap 21 can be charged by placing the elongated strap 21 into charger 30 which are connected to the mains via a mains plug 31. The electric current is passed to the wires of the elongated strap 21 in the inductive charging part 40 which lead the current to the battery 42. The portable electronic apparatus 20 may comprise pulse charging means 41 which can efficiently control the charging of the battery 42 against over-charging.

The pulse charging means 41 are of no specific importance for the elongated strap 21 itself. State of art charging technology can be used in combination with an inductive charger means.

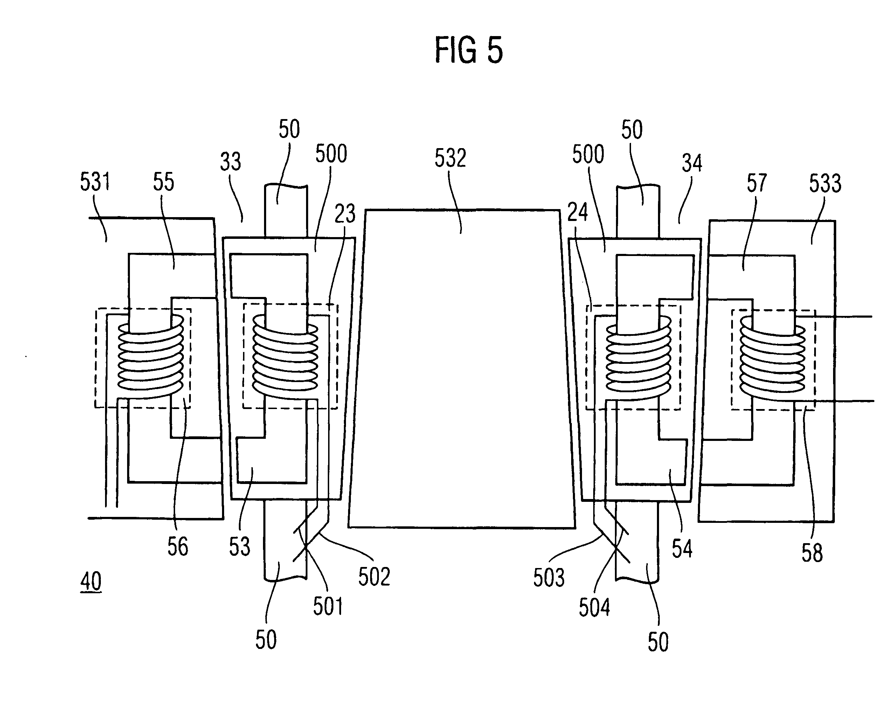

Figure 5 illustrates the structure of the inductive charging part 40 in more detail. It can be understood to correspond a sectional cut along the line marked with I-I in Figure 3.

The elongated strap 21 comprises shielding 50, preferably made of a non-conductive material, placed around the wiring 501, 502, 503, 504. The wires 501, 502 connect the inductive coupler 23 with the rechargeable battery 42, and the wires 502, 503 the inductive feedback coupler 24 to the feedback circuitry of the portable electronic device 20.

The inductive coupler 23, such as a charging coil, has a metallic core element 53 which is preferably of a ferric material and has a form of U. The coating 500 is of non-magnetic material, such as of different polymeric materials or aluminum.

The corresponding part of charger 30 includes a coil 56 having a ferrite core 55, and housing 531. When the inductive coupler 23 including the charging coil is brought close to the opening 35, the magnetic field of the coil 56 connects to the inductive coupler 23. Now because the current brought to the charger 30 from mains is alternative current AC, the changing magnetic field induces a current in the inductive coupler 23 and therefore into the wires 501, 502. This current can be used for charging the rechargeable battery 42 of the portable electronic device 20, for example. The ferrite cores 53 and 55 increase the magnetic field between the coil in the inductive coupler 23 and coil 56. The number of windings of the coils in the inductive coupler 23 and coil 56 is matched to give a suitable charging voltage for the rechargeable battery 42. If the charger 30 includes a pre-transformer, the windings of the coils 56 and 53 can have a 1:1 ratio. This also reduces the risk of an electric hazard. Other possibilities for the winding ratios are possible as well, depending of the result desired.

As can be seen from the shape of the holes 33, 34 in Figure 3, and the shape of the cross-cut of the holes 33, 34 in Figure 5, the inductive coupler 23 including the coil can have a cut-conical shape. The idea of the cut-conical shape is that when the portable electronic apparatus 20 is hanging from the elongated strap 21, it exerts part of the gravity to the inductive coupling element therefore tightening the magnetic coupling between the inductive coupler 23 and coil 56.

To facilitate the tightening, the walls 531, 532 of the charger 30 can have slightly tilted shape.

The inductive feedback coupler 24, such as a feedback coil, is connected to wires 503 and 504. They are connected to charging control circuit 41 of the portable electronic apparatus 20. The control circuit 41 can be used to send feedback information from the portable electronic apparatus 20 to the charger 30. The structure of the inductive feedback coupler 24 including the feedback coil is identical to the structure of the inductive coupler 23 including the charging coil. In other words, the inductive feedback coupler 24 has a ferrite core 54, and the coil 58 has a ferrite core 57. Further, the walls 532 and 533 are be aligned to fit the inductive coupler 23 including charging coil so that the non-magnetic coating 500 tightly matches with the shape of the walls 532 and 533 limiting the hole 34.

According to one embodiment of the present invention, the inductive coupler 23 and the inductive feedback coupler 24 are kept equal in shape and size. Then the system comprises means for testing which coil is for charging and which one is for feedback purposes. One problem to be solved is that for a deeply discharged battery there will be no automatic feed back. Then the charger 30 preferably supplies a low charging current on both coils until the testing means wakes up and gives as feedback which inductive coupler is to be used as the inductive coupler 23 for charging. Further, it sets the current limit. In this manner, the system can be able to provide the charging other circuitry with information on how much energy is put to the battery. Then the charger 30 can compare actual performance to see if energy is lost in the coupling of the coils.

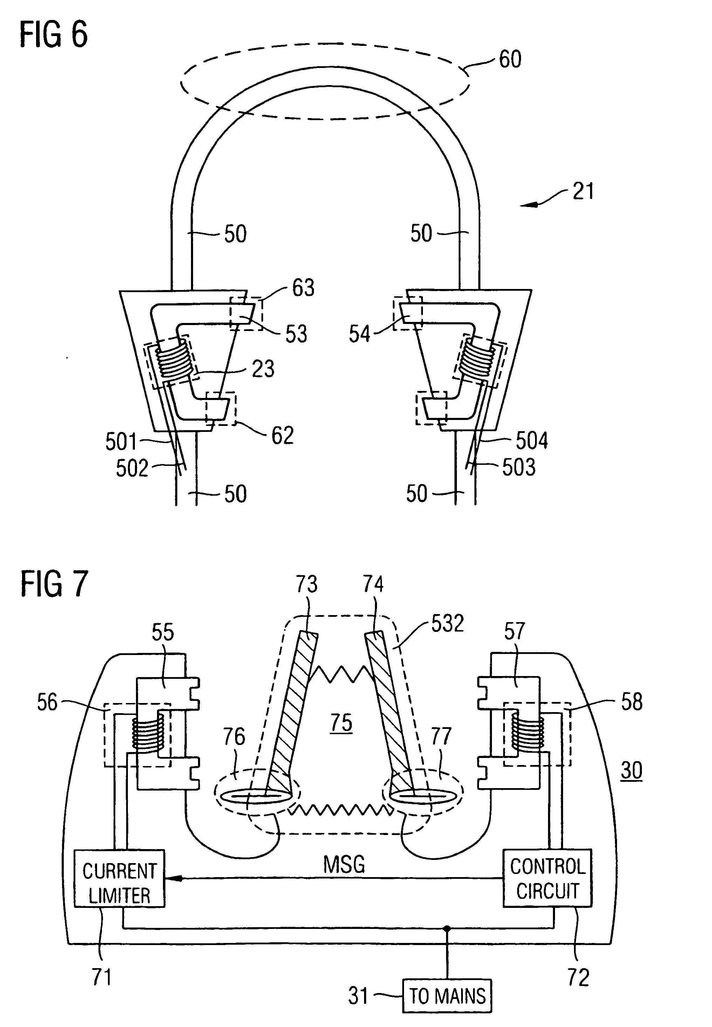

Figure 6 illustrates how the inductive coupler 23, 24 can be constructed. The shielding 50 extends on top of the two inductive couplers to form a unitary strap, the extension being marked with reference number 60. The shielding 50 may be flexible material offering good bending properties.

The ferrite cores 53 and 54 may extend partially through the non-magnetic coating 500 to meet the surface of the inductive coupler. They may even extend outside the surface as shown with the dashed boxes 62 and 63 in Figure 6. The purpose of these extending parts is to provide physical contact with a corresponding part of ferrite cores 55 and 57 for better transmission of eddy currents and thereby also magnetic coupling.

The C-shapes of the inductive couplers can also be mirror-symmetric, i.e. the openings 63 and 62 of each inductive coupler would point outwards from the other inductive coupler. This is of no practical importance because the extension 60 provides good bending properties; therefore it is possible to easily turn the coil in the charger 30.

Figure 7 illustrates one embodiment of the charger 30. The charger 70 includes a current limiter 71, such as a linear regulator, for limiting the current to be passed to the inductive coupler 23. The current limiter is preferably controlled by the control circuit 72, in a similar manner as described in the pending European patent application 03009556.6. The control circuit 72 can get the feedback information through the coil 58.

In order to enhance the magnetic coupling between the inductive coupler 23 and the coil 56, the wall 532 can include fixing means 73. The purpose of the tightening means is to exert pressure on the inductive coupler 23 including the charging coil. This can be implemented in many different ways, for example, by providing an elastic and extensible sealing 75 between the fixing means 73 and 74, and then locks 76 and 77. The locks 76 and 77 can provide a snap-fit locking for the inductive couplers, by locking the position of the fixing means 73 and 74. Further, they should then include suitable releasing means. The elastic sealing 75 extends in the space between the inductive couplers so that void space between the inductive couplers can be avoided.

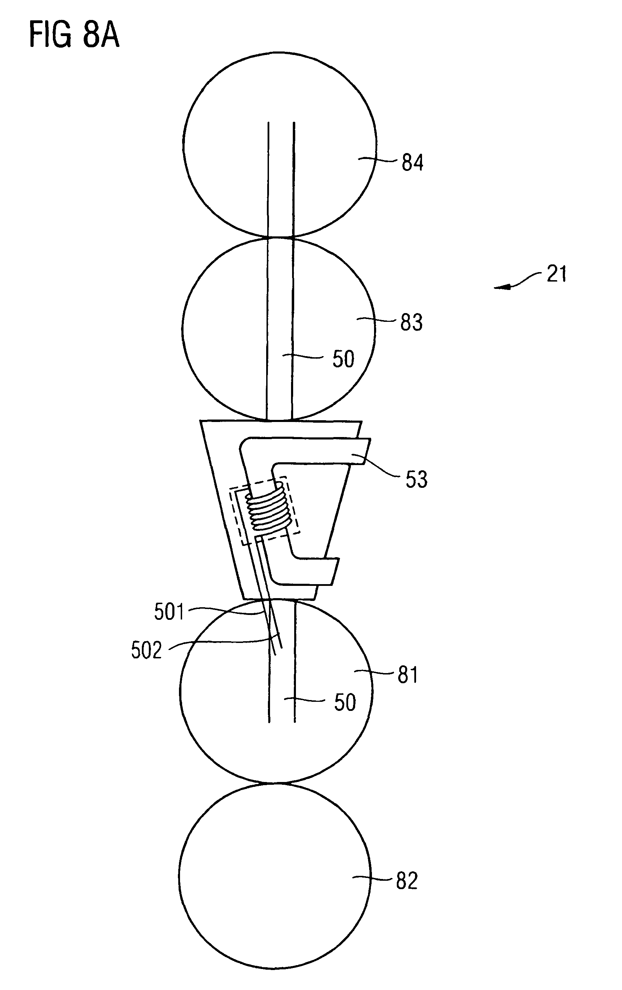

Figure 8A shows protective elements 81, 82, 83, and 84 around the inductive coupler. The idea is to provide protection for these protective elements 81, 82, 83, and 84 around the shielding 50 in the neighborhood of the inductive couplers 23, 24 including the charging coil or the feedback coil. The protective elements 81, 82, 83, and 84 preferably have a diameter of 50% to 150% of the diameter of respective inductive coupler. Firstly, they protect the inductive coupler and ferrite cores 53, 54 from being stuck. Secondly, they provide a nice hide for the inductive coupling elements, therefore providing an aesthetically more appealing structure.

If the coils are reasonably small, they can have the look of small pieces of jewelry, or they can be covered with pearl or other fashionable material. In the selection of material, the main criteria is that the material should not have an adverse effect in the coupling of the coils.

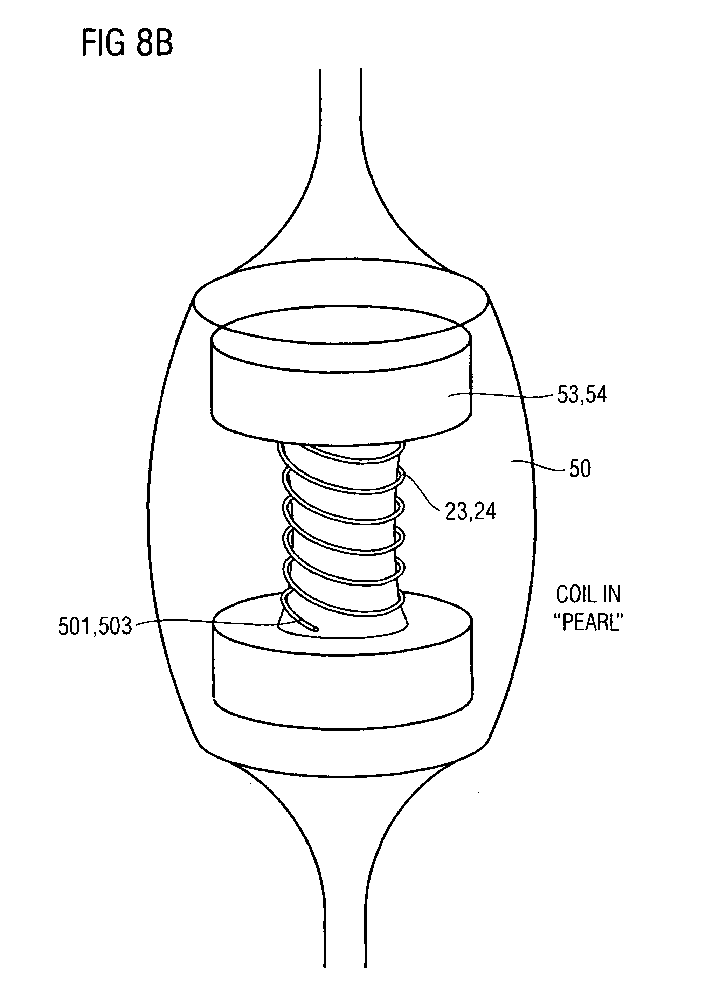

Figure 8B shows another possible structure for the inductive coupler. Now the shielding 50 has a shape of a slightly elongated pearl. Such a form is especially suitable for protecting the inductive coupler, such as the inductive couplers 23 or 24 together with the ferrite core 53, 54 and the wiring 501, 503. The ferrite core can be fitted to the shape of the shielding, i.e. it can have even a bone-like shape, being narrower in the middle.

The inductive coupler can be made to show rotational symmetry. This makes it easier for the user to place the elongated strap 21 to the charger 30, because then the actual direction of the ferrite core 53, 54 plays no role.

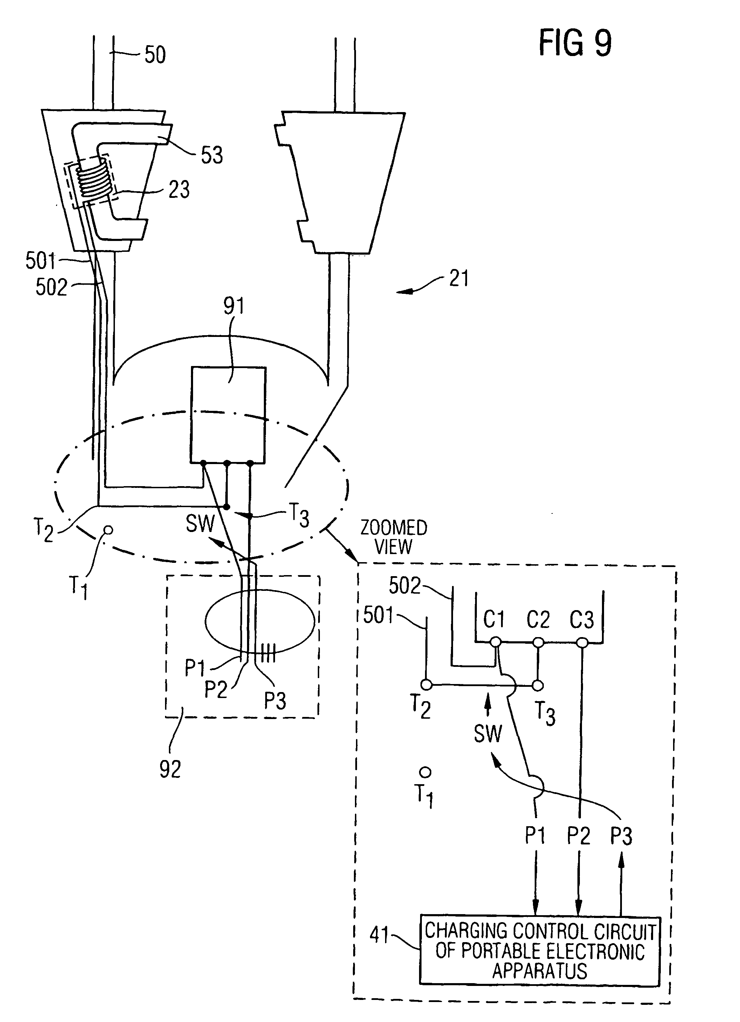

Figure 9 shows how charging for a rechargeable battery 91 located in the elongated strap 21 can be performed. This is a more complicated task in comparison with the charging of a rechargeable battery 42 located within the portable electronic apparatus 20.

The wires 501 and 502 coming from the coil of the inductive coupler 23 lead to terminal T2 and to connector C1 of the battery 91, respectively.

Charging control circuit 41 controls the position of switch SW. When the switch SW is in position T2, terminal T2 is connected to terminal T3. Terminal T3 is further connected to connector C2 of the battery. If the switch is in the position T1, the circuit is open, i.e. no current is passed to the connector C2.

The charging control circuit 41 measures the voltage over battery connectors C3 and C1. If the voltage exceeds a predefined voltage limit, the switch SW is set to position T1. In the opposite case, the switch is in position T2. The predefined voltage limit depends on the battery type used.

Connector pins P1, P2 and P3 are in the connector 92. The connector 92 can be sealed to give resistance against dust and moisture.

A charging system is normally designed to charge a rechargeable battery with a charge of 1 C. Therefore a charging current within an hour corresponding to the rated capacity of the battery is normally used. With such a charge current, it takes approximately 2 to 3 hours before the battery is fully charged. Most of the charge is transmitted during the first hour.

If the portable electronic device 20 has a battery with 500 mAh nominal capacity, a coil having a height of 10 mm and diameter of under 5 mm should be sufficient in the inductive coupler 23, and conform to the electrical specifications. Such a small coil should not invoke any aggressive reaction from the users. Because of the relatively small size, the coil appears like jewelry, therefore increasing the user acceptance.

The inductive coupler 23 is connected to the portable electronic device 20 with a cable. The charging electronics can be placed on top of the phone under the housing where an electric connector for charging is located. By using shielded cables, the disturbances to an antenna can be reduced as disclosed in a pending European patent application 03003440.9. This is particularly useful if the antenna is also located within the elongated strap 21.

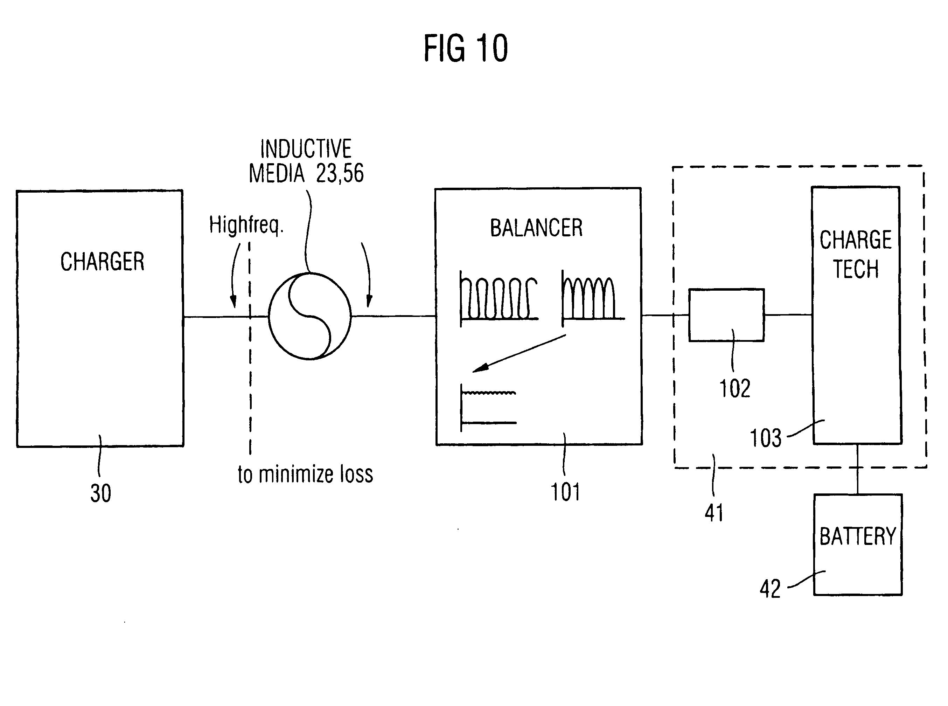

Figure 10 shows a detailed look of charging circuitry on the portable electronic apparatus side. The current in the inductive couplers, i.e. the coils of the inductive coupler 23 and 56, is a relatively high frequency alternating current with a nominal frequency around 4 kHz in order to minimize losses and to enable a small coupler size.

The balancer 101 may include an AC to DC converter, and a sort of capacitor as well. Charging circuitry 41 includes electrical components 103 used for charging, and possibly a switch 102 that keeps the voltage over battery 42 connectors steady. The switch 102 is optional, and it is to be understood that aspects presented in Figure 9 and Figure 10 can be combined in many different ways. One important aspect is also that the inductive part of the system works independently on the portable electronic apparatus side. This may further include that the balancer 101 and charging circuitry 41 work independently of each other.

The invention can be used in every portable electronic apparatus equipped with a strap. Examples of such apparatuses include pendant phones, and other portable radio phones or terminals. Especially suitable targets are apparatuses which benefit from high reliability against dust and water. Further applications include heat resistant industrial measurement tools and GPS receivers.

## Claims

1. An elongated strap (21) connected to a portable electronic apparatus (20) comprising a rechargeable battery (41, 91) the elongated strap (21) being suitable for carrying the portable electronic apparatus (20) around the neck or wrist of a user, the portable electronic apparatus (20) not being a wrist watch and/or the elongated strap (21) not being a bracelet, **wherein**: the elongated strap (21) comprises an inductive coupler (23) adapted to receive a magnetic field; and current transfer means (501, 502) electrically connecting the inductive coupler (23) to the portable electronic apparatus (20), wherein the current transfer means (501, 502) is adapted to recharge the rechargeable battery (41, 91).

2. An elongated strap according to claim 1, **wherein**: said inductive coupler (23) comprises a partial, non-magnetic coating (500) having a tapering form.

3. An elongated strap according to claim 1 or 2, **wherein**: said strap (21) comprises a shielding (50) of a non-conductive material around the current conductive transfer means (501, 502).

4. An elongated strap according to claim 3, further **comprising:** a protecting element (81, 82, 83, 84) around the shielding (50) in the neighborhood of the inductive coupler (23 for protecting the inductive coupler (23) and ferrite core (53) therein from being stuck.

5. An elongated strap according to any one of the preceding claims 1 to 4, **wherein:** said inductive coupler (23) comprises a coil.

6. An elongated strap according to claim 5, **wherein:** said inductive coupler (23) is partially coated with a non-conductive material leaving an opening (62, 63) for a ferrite core (53) in the inductive coupler.

7. An elongated strap according to any one of the preceding claims 1 to 6, further **comprising:** signalling means (24) electrically connectable to a circuitry (41) of the portable electronic apparatus (20), for indicating the presence of the portable electric apparatus to receiving means (30).

8. An elongated strap according to claim 7, **wherein:** said signalling means (24) comprise a second inductive coupler adapted to receive a rising voltage pulse from the circuitry (41) thus inducing a magnetic field.

9. A portable electronic apparatus (20) **comprising:** an elongated strap (21) according to any one of the preceding claims 1 to 8.

10. A receiving means (30) adapted to receive an inductive coupler (23) according to any one of the preceding claims 1 to 8, the receiving means (30) further comprising: a hole (33, 34) having an opening (35, 46) adapted to accommodate the inductive coupler (23) having a partial, non-magnetic coating (500); and a secondary inductive coupler (56) for inducing a magnetic field to the inductive coupler (23).

11. A receiving means (30) according to claim 10, **wherein:** the said secondary inductive coupler (56) is adapted to be parallel to a coil in the inductive coupler (23).

12. A receiving means (30) according to claim 11, **wherein**: the said secondary inductive coupler (56) further comprises a ferrite core (55) adapted to match to a ferrite core (53) in the inductive coupler (23).

13. A receiving means (30) according to any one of claims 10 to 12, further **comprising**: an opening (35, 36) for receiving the strap (21), the opening (35, 36) being narrower than the non-magnetic coating (500) or the inductive coupler (23).

14. A receiving means (30) according to any one of claims 10 to 13, further **comprising**: detecting means (58, 72) for detecting the presence of the portable electric apparatus in the receiving means (30).

15. A receiving means (30) according to claim 14, **wherein:** said detecting means (58, 72) include a second inductive coupler adapted to receive a magnetic field.

16. A receiving means (30) according to any one of claims 10 to 15, **wherein:** the hole has a tapering form.

17. A charging system suitable for use for a device according to claim 9, **comprising**: an elongated strap (21) according to any one of claims 1 to 8; and receiving means (30) according to any one of the claims 10 to 16.

## Patentansprüche

1. Verlängertes Band (21), das mit einer tragbaren elektronischen Vorrichtung (20) verbunden ist, welche eine wieder aufladbare Batterie (41, 91) enthält, wobei das verlängerte Band (21) dazu geeignet ist, die tragbare elektronische Vorrichtung (20) daran um den Hals oder um das Handgelenk des Benutzers zu tragen, wobei die tragbare elektronische Vorrichtung (20) keine Armbanduhr ist und/oder das verlängerte Band (21) kein Armband ist, wobei: das verlängerte Band (21) einen induktiven Koppler (23) umfasst, der für das Empfangen eines Magnetfeldes ausgelegt ist; sowie ein Stromübertragungsmittel (501, 502), über das der induktive Koppler (23) mit der tragbaren elektronischen Vorrichtung (20) elektrisch verbunden wird, wobei das Stromübertragungsmittel (501, 502) dafür geeignet ist, die wieder aufladbare Batterie (41, 91) wieder aufzuladen.

2. Verlängertes Band gemäß Anspruch 1, wobei: der besagte induktive Koppler (23), der eine sich verjüngende Form aufweist, eine partielle, nicht-magnetische Beschichtung (500) umfasst.

3. Verlängertes Band gemäß Anspruch 1 oder 2, wobei: das besagte verlängerte Band (21) eine Abschirmung (50) aus einem nicht leitenden Material besitzt, die sich rund um das Strom leitende Übertragungsmittel (501, 502) erstreckt.

4. Verlängertes Band gemäß Anspruch 3, welches ferner Folgendes umfasst: ein schützendes Element (81, 82, 83, 84) rund um die Abschirmung (50) in der Nachbarschaft des induktiven Kopplers (23), um den induktiven Koppler (23) und den darin enthaltenen Ferritkern (53) gegen Stöße zu schützen.

5. Verlängertes Band gemäß einem der vorstehenden Ansprüche 1 bis 4, wobei: der besagte induktive Koppler (23) eine Spule umfasst.

6. Verlängertes Band gemäß Anspruch 5, wobei: der besagte induktive Koppler (23) partiell mit einem nichtmagnetischen Material beschichtet ist, das eine Öffnung (62, 63) freilässt für einen Ferritkern (53) in dem induktiven Koppler.

7. Verlängertes Band gemäß einem der vorstehenden Ansprüche 1 bis 6, das ferner Folgendes umfasst: ein Signalisierungsmittel (24), das elektrisch mit einem Schaltkreis (41) der tragbaren elektronischen Vorrichtung (20) verbunden werden kann, um dem aufnehmenden Mittel (30) die Anwesenheit der tragbaren elektronischen Vorrichtung anzuzeigen.

8. Verlängertes Band gemäß Anspruch 7, wobei: das besagte Signalisierungsmittel (24) einen zweiten induktiven Koppler umfasst, der dafür ausgelegt ist, einen ansteigenden Spannungsimpuls von dem Schaltkreis (41) zu empfangen und so ein Magnetfeld zu induzieren.

9. Tragbare elektronische Vorrichtung (20), die Folgendes umfasst: ein verlängertes Band (21) gemäß einem der vorstehenden Ansprüche 1 bis 8.

10. Aufnehmendes Mittel (30), das geeignet ist, einen induktiven Koppler (23) gemäß einem der vorstehenden Ansprüche 1 bis 8 aufzunehmen, wobei das aufnehmende Mittel (30) ferner Folgendes umfasst: eine Bohrung (33, 34), welche eine Öffnung (35, 46) aufweist, die geeignet ist, den induktiven Koppler (23) aufzunehmen, welcher eine partielle nicht-magnetische Beschichtung (500) hat; sowie einen sekundären induktiven Koppler (56), um ein Magnetfeld in den induktiven Koppler (23) zu induzieren.

11. Aufnehmendes Mittel (30) gemäß Anspruch 10, wobei: der besagte sekundäre induktive Koppler (56) dafür ausgelegt ist, parallel zu einer Spule im induktiven Koppler (23) angeordnet zu sein.

12. Aufnehmendes Mittel (30) gemäß Anspruch 11, wobei: der besagte sekundäre induktive Koppler (56) ferner einen Ferritkern (55) umfasst, der dafür ausgelegt ist, zum Ferritkern (53) im induktiven Koppler (23) zu passen.

13. Aufnehmendes Mittel (30) gemäß einem der vorstehenden Ansprüche 10 bis 12, das ferner Folgendes umfasst: eine Öffnung (35, 36) zur Aufnahme des Bandes (21), wobei die Öffnung (35, 36) einen geringeren Durchmesser hat als die nicht-magnetische Beschichtung (500) oder der induktive Koppler (23).

14. Aufnehmendes Mittel (30) gemäß einem der vorstehenden Ansprüche 10 bis 13, das ferner Folgendes umfasst: ein erkennendes Mittel (58, 72) zur Erkennung der Anwesenheit der tragbaren elektronischen Vorrichtung in dem aufnehmenden Mittel (30).

15. Aufnehmendes Mittel (30) gemäß Anspruch 14, wobei: das besagte erkennende Mittel (58, 72) einen zweiten induktiven Koppler enthält, welcher dafür ausgelegt ist, ein Magnetfeld zu empfangen.

16. Aufnehmendes Mittel (30) gemäß einem der vorstehenden Ansprüche 10 bis 15, wobei: die Bohrung eine sich verjüngende Form hat.

17. Ladesystem, welches für die Verwendung für ein Gerät gemäß Anspruch 9 geeignet ist, und das Folgendes umfasst: ein verlängertes Band (21) gemäß einem der vorstehenden Ansprüche 1 bis 8; sowie ein aufnehmendes Mittel (30) gemäß einem der vorstehenden Ansprüche 10 bis 16.

## Revendications

1. Bande allongée (21) reliée à un appareil électronique portable (20) comprenant une batterie rechargeable (41, 91), la bande allongée (21) étant apte à porter l'appareil électronique portable (20) autour du cou ou du poignet d'un utilisateur, l'appareil électronique portable (20) n'étant pas une montre-bracelet et/ou la bande allongée (21) n'étant pas un bracelet, **dans laquelle :** la bande allongée (21) comprend un coupleur inductif (23) adapté à recevoir un champ magnétique; et un moyen de transfert de courant (501, 502) reliant électriquement le coupleur inductif (23) à l'appareil électronique portable (20), dans lequel le moyen de transfert de courant (501, 502) est adapté pour recharger la batterie rechargeable (41, 91).

2. Bande allongée selon la revendication 1, **dans laquelle :** ledit coupleur inductif (23) comprend un revêtement non-magnétique partiel (500) ayant une forme effilée.

3. Bande allongée selon la revendication 1 ou 2, **dans laquelle :** ladite bande (21) comprend un blindage (50) d'un matériau non-conducteur autour du moyen de transfert conducteur de courant (501, 502).

4. Bande allongée selon la revendication 3, **comprenant** en outre : un élément de protection (81, 82, 83, 84) autour du blindage (50) au voisinage du coupleur inductif (23) pour protéger le coupleur inductif (23) et le noyau en ferrite (53) qui s'y trouve et les empêcher d'être coincés.

5. Bande allongée selon l'une quelconque des revendications 1 à 4 précédentes, **dans laquelle :** ledit coupleur inductif (23) comprend une bobine.

6. Bande allongée selon la revendication 5, **dans laquelle :** ledit coupleur inductif (23) est revêtu partiellement d'un matériau non-conducteur laissant une ouverture (62, 63) pour un noyau en ferrite (53) dans le coupleur inductif.

7. Bande allongée selon l'une quelconque des revendications 1 à 6 précédentes, **comprenant** en outre : un moyen de signalisation (24) pouvant être relié électriquement à un circuit (41) de l'appareil électronique portable (20) afin d'indiquer la présence de l'appareil électronique portable à un moyen de réception (30).

8. Bande allongée selon la revendication 7, **dans laquelle :** ledit moyen de signalisation (24) comprend un second coupleur inductif adapté pour recevoir une impulsion de tension montante en provenance du circuit (41), induisant ainsi un champ magnétique.

9. Appareil électronique portable (20) **comprenant :** une bande allongée (21) selon l'une quelconque des revendications 1 à 8 précédentes.

10. Moyen de réception (30) adapté pour recevoir un coupleur inductif (23) selon l'une quelconque des revendications 1 à 8 précédentes, le moyen de réception (30) **comprenant** en outre : un trou (33, 34) possédant une ouverture (35, 46) adapté pour loger le coupleur inductif (23) ayant un revêtement non-magnétique partiel (500); et un coupleur inductif secondaire (56) pour induire un champ magnétique vers le coupleur inductif (23).

11. Moyen de réception (30) selon la revendication 10, **dans lequel :** ledit coupleur inductif secondaire (56) est adapté pour être parallèle à une bobine dans le coupleur inductif (23).

12. Moyen de réception (30) selon la revendication 11, **dans lequel :** ledit coupleur inductif secondaire (56) comprend en outre un noyau en ferrite (55) adapté pour être conjugué à un noyau en ferrite (53) dans le coupleur inductif (23).

13. Moyen de réception selon l'une quelconque des revendications 10 à 12, **comprenant** en outre : une ouverture (35, 36) pour recevoir la bande (21), l'ouverture (35, 36) étant plus étroite que le revêtement non-magnétique (500) ou que le coupleur inductif (23).

14. Moyen de réception (30) selon l'une quelconque des revendications 10 à 13, **comprenant** en outre : des moyens de détection (58, 72) pour détecter la présence de l'appareil électrique portable dans le moyen de réception (30).

15. Moyen de réception (30) selon la revendication 14, **dans lequel :** lesdits moyens de détection (58, 72) comprennent un second coupleur inductif adapté pour recevoir un champ magnétique.

16. Moyen de réception (30) selon l'une quelconque des revendications 10 à 15, **dans lequel :** le trou présente une forme effilée.

17. Système de charge apte à être utilisé pour un dispositif selon la revendication 9, **comprenant :** une bande allongée (21) selon l'une quelconque des revendications 1 à 8; et un moyen de réception (30) selon l'une quelconque des revendications 10 à 16.
